# EUROPÄISCHE PATENTSCHRIFT

(11) **EP 1 551 582 B1**
(45) Veröffentlichungstag und Bekanntmachung des Hinweises auf die Patenterteilung: **31.03.2010**
(21) Anmeldenummer: 03787502.8
(22) Anmeldetag: 12.08.2003
(51) Int. Cl.: B23B 27/00, B23B 27/04, B23B 51/04

(54) **Schneidwerkzeug zum Drehen und Bohren ins Volle**
Cutting tool for turning and drilling from solid
Outil de coupe pour le tournage et le perçage

(30) Priorität: 16.08.2002 AT 5502002 U
(43) Veröffentlichungstag der Anmeldung: 13.07.2005
(73) Patentinhaber: CERATIZIT Austria Gesellschaft m.b.H., 6600 Reutte /Tirol (AT)
(72) Erfinder: BERGER, Dietmar, A-6600 Lechaschau (AT); ROFNER, Rudolf, AT-6611 Heiterwang (AT); VENTURINI, Remus, 87672 Rosshaupten (DE)
(86) Internationale Anmeldenummer: PCT/AT2003/000234
(87) Internationale Veröffentlichungsnummer: WO 2004/016378

(56) Entgegenhaltungen:
- DE-A- 4 415 425
- US-A- 4 607 988

## Beschreibung

Die Erfindung betrifft ein Schneidwerkzeug zum Drehen und Bohren ins Volle, bestehend aus einem Bohrerschaft und einem Schneidkopf an einem Ende mit einer im wesentlichen etwa quer zur Bohrerachse verlaufenden geraden, stirnseitigen Schneidkante die bis zur Bohrerachse schneidet und mit dieser einen Winkel α von weniger als 90° einschließt und einer daran anschließenden, die Bohrungswandung schneidenden geraden, seitlichen Schneidkante, die mit einer Senkrechten zur Bohrerachse einen Winkel β von mehr als 90° einschließt und die wiederum in eine gerade, rückseitige Schneidkante übergeht, die etwa parallel zur stirnseitigen Schneidkante verläuft.

Ein derartiges Schneidwerkzeug bei dem der Schneidkopf durch eine im wesentlichen rhombus- oder rhomboidförmige Wendeschneidplatte gebildet wird, ist beispielsweise in der EP 0 642 859 A1 beschrieben. Ein entsprechendes Schneidwerkzeug ist nicht nur zum Bohren ins Volle geeignet, sondern kann auch verschiedene Drehoperationen wie Längs-, Plan- oder Kopierdrehen ausführen. Was mit einem derartigen Werkzeug nicht ausgeführt werden kann sind Stechbearbeitungen, wie Innen- oder Außenstechen.

Die EP 0 565 907 B1 beschreibt ein Werkzeug mit zylindrischem Schaft und einem austauschbaren Schneidkörper an einem Ende. Der Schneidkörper weist einen seitlich vorspringenden Abschnitt mit einer parallel zur Werkzeugachse verlaufenden Schneidkante auf, mit dem in erster Linie Einstiche, beispielsweise Inneneinstiche in kleineren Bohrungen hergestellt werden. Durch die besondere kraft- und formschlüssige Klemmung des Schneidkörpers lassen sich mit einem derartigen Schneidwerkzeug auch Nuten auskammem und sogar Dreh- und Fräsarbeiten ausführen. Zur Herstellung von Bohrungen ins Volle ist ein derartiges Schneidwerkzeug jedoch nicht geeignet.

Das DE GM 295 01 183 U1 beschreibt ebenfalls ein Innenstech-Drehwerkzeug mit einem auswechselbaren Schneidkörper. Der Schneidkörper ist als runder Schaft mit einseitiger Abflachung zur sicheren Befestigung in einem Werkzeughalter ausgeführt und weist am Ende einen seitlich vorspringenden Abschnitt zur Durchführung von Stech- und Drehoperationen auf. Aber auch dieses Schneidwerkzeug ist nicht zur Herstellung von Bohrungen ins Volle geeignet.

Die Aufgabe der vorliegenden Erfindung ist es ein Schneidwerkzeug zu schaffen, mit dem einerseits ins Volle gebohrt werden kann und mit dem darüber hinaus auch noch Stech- und Drehoperationen durchgeführt werden können.

Erfindungsgemäß wird dies dadurch erreicht, dass die seitliche Schneidkante an einem Abschnitt des Schneidkopfes ausgeführt ist, der vom Bohrerschaft mit einer Höhe im Bereich von mindestens 5 % bis maximal 40 % des Bohrerdurchmessers vorspringt und der eine Breite im Bereich von mindestens 5 % bis maximal 40 % des Bohrerdurchmessers aufweist, wobei das Verhältnis von Höhe zu Breite im Bereich von 1 : 0,7 bis 1 : 1,3 liegt und dass die rückseitige Schneidkante mit der Bohrerachse einen Winkel γ von weniger als 90° einschließt.

Die Erfindung sieht also vor, bei bisher bekannten Schneidwerkzeugen zum Innenstechen mit vorspringenden, seitlichen Abschnitten auch den stirnseitigen, quer zur Werkzeugachse verlaufenden Abschnitt als Schneidkante auszuführen, wodurch derartige Werkzeuge auch zum Bohren ins Volle geeignet sind. Dabei war es überraschend und nicht ohne weiteres vorhersehbar, dass derartige, vorspringende Abschnitte den großen Belastungen die beim Bohren ins Volle auftreten, ohne vorzeitige Zerstörung des Schneidkopfes widerstehen können. Wichtig dabei ist, dass die Höhe und Breite des vorspringenden Abschnittes in Bezug auf den Bohrerdurchmesser innerhalb der festgelegenen Grenzen liegen. Dadurch dass anschließend an die seitliche Schneidkante eine rückseitige Schneidkante als gerader Schneidkantenabschnitt vorgesehen ist der etwa parallel zur stirnseitigen Schneidkante verläuft, können Einstechnuten beliebig verbreitert und ausgedreht werden. Der Winkel γ den dieser Schneidkantenabschnitt mit der Bohrerachse einschließt muss dabei kleiner als 90° sein. In der Praxis hat sich eine Bereich von etwa 87° bis 89,5° bewährt.
Durch die erfindungsgemäße Ausgestaltung derartiger Schneidwerkzeuge wird gegenüber bisher bekannten Schneidwerkzeugen die Vielfalt der Bearbeitungsmöglichkeiten erhöht, ohne dass das Werkzeug oder der Werkzeugkopf gewechselt werden muss. Dadurch werden kürzere Rüstzeiten, weniger Programmieraufwand an der Bearbeitungsmaschine und geringere Lagerkosten und damit eine deutliche Steigerung der Produktivität erreicht.

Besonders vorteilhaft ist es wenn der Abschnitt vom Bohrerschaft mit einer Höhe im Bereich von 5 % bis 30 % und mit einer Breite im Bereich von 10 % bis 30 % des Bohrerdurchmessers vorspringt.

Um beim Bohren gut arbeiten zu können und einen möglichst ebenen Bohrungsgrund ohne Zapfenausbildungen im Zentrum zu erzielen ist es vorteilhaft, wenn die stirnseitige Schneidkante durchgehend gerade zumindest bis zur Bohrerachse verläuft. Als Variante kann die durchgehend gerade stirnseitige Schneidkante schon vor der Bohrerachse enden und dort in einen, mit stumpfem Winkel anschließenden Abschnitt übergehen der zumindest bis zur Bohrerachse verläuft. Auf diese Weise wird zwar der besonders bruchgefährdete Zentrumsabschnitt der Schneidkante verstärkt, es wird jedoch im Zentrum des Bohrungsgrundes ein kegelstumpfförmiger Zapfen ausgebildet, der vielfach unerwünscht ist.

Weiters ist es von Vorteil, wenn die stirnseitige Schneidkante mit der Bohrerachse einen Winkel α von etwa 89,5° einschließt. Damit wird ein nahezu ebener Bohrungsgrund erreicht und es ist trotzdem gewährleistet, dass die für eine Drehbearbeitung, wie Plansdrehen, notwendige Freistellung der Schneidkante in ausreichender Weise vorliegt.

Besonders günstige Schneidwerkzeuge zum Einstechen und zum Innen- und Außenausdrehen erhält man dann, wenn die seitliche Schneidkante als Gerade ausgeführt ist, die mit der Senkrechten zur Bohrerachse einen Winkel β einschließt, der im Bereich von etwa 91° liegt. Wenn der Winkel β möglichst geringfügig größer als 90° ist, ist gewährleistet, dass einerseits die Einstiche einen möglichst ebenen Nutengrund aufweisen und dass andererseits auch noch die für das Ausdrehen notwendige Mindestfreistellung der Schneidkante vorhanden ist. Bei größeren Abweichungen von 90° bis zu einem Winkel β von 140° ist die seitliche Schneidkante insbesondere zum Freistechen von Gewinden oder zum Formdrehen geeignet.

Eine weitere vorteilhafte Variante des erfindungsgemäßen Schneidwerkzeuges ist es, die stirnseitige Schneidkante mit einem Schneidkantenabschnitt zu versehen, der über die Bohrerachse hinaus verläuft und der mit einer Senkrechten zur Bohrerachse einen Winkel κ von 5° - 20° einschließt.
Mit einer derartigen Ausgestaltung werden Schneidkantenausbrüche im Zentrum des Schneidwerkzeuges vermieden, ohne dass ein störender Mittelzapfen im Bohrungsgrund zurückbleibt. Darüber hinaus wird bei Verwendung von auswechselbaren Schneideinsätzen für den Schneidkopf eine vergrößerte Auflagefläche für den Schneideinsatz und damit eine größere Stabilität des Schneidwerkzeuges erreicht.

Die Erfindung lässt sich nicht nur an einem Schneidwerkzeug mit einem einstückig mit dem Bohrerschaft ausgebildeten Schneidkopf verwirklichen, sondern besonders vorteilhaft auch bei Schneidwerkzeugen bei denen der Schneidkopf durch einen auswechselbaren Schneideinsatz gebildet wird.

Dabei wird man insbesondere für kleinere Bohrungsdurchmesser im Bereich von etwa 4 bis 8 mm den Schneidkopf des Schneidwerkzeuges einstückig mit dem Bohrerschaft ausbilden, während für größere Bohrungsdurchmesser ab etwa 10 mm der Schneidkopf in der Regel durch eine auswechselbare Wendeschneidplatte gebildet wird, wodurch eine größere Wirtschaftlichkeit des Schneidwerkzeuges erreicht wird.

Bei Schneidwerkzeugen bei denen der Schneidkopf durch einen auswechselbaren Schneideinsatz gebildet wird, haben sich als Schneideinsätze solche mit im wesentlichen quadratischer oder rechteckiger Grundform mit zwei spiegelverkehrt gegenüberliegenden, vorspringenden Abschnitten als besonders vorteilhaft bewährt. Bei Verwendung derartiger Schneideinsätze kann die Einsatzmöglichkeit des Schneidwerkzeuges durch Verdrehen des Schneideinsatzes und Verwendung einer neuen Schneidkante verdoppelt und damit die Wirtschaftlichkeit weiter verbessert werden.

Im Folgenden wird die Erfindung an Hand von Figuren näher erläutert.
Es zeigen:
- Fig. 1: ein erfindungsgemäßes Schneidwerkzeug in Schrägansicht
- Fig. 2: den vergrößerten Schneidkopf des Schneidwerkzeuges nach Fig. 1 in Draufsicht
- Fig. 3: die Variante eines erfindungsgemäßen Schneidwerkzeuges in Schrägansicht
- Fig. 4: den vergrößerten Schneidkopf des Schneidwerkzeuges nach Fig. 3 in Draufsicht

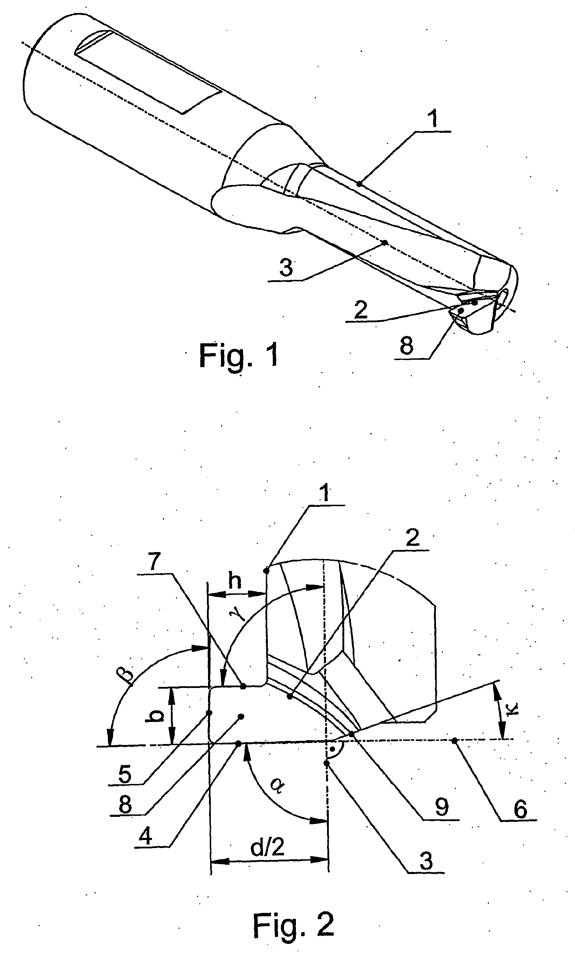

In Figur 1 ist ein erfindungsgemäßes Schneidwerkzeug zum Bohren ins Volle dargestellt. In dieser speziellen Ausführung ist der Schneidkopf-2- einstückig mit dem Schaft -1- aus Hartmetall hergestellt. Die spezielle Ausführung des Schneidkopfes -2- ist im Detail aus Figur 2 zu ersehen. Der Schneidkopf -2- weist einen Abschnitt -8- auf, der vom Bohrerschaft -1-, mit einer Höhe h, die 25 % des Bohrerdurchmessers beträgt und einer Breite b, die 25 % des Bohrerdurchmessers beträgt, seitlich vorspringt. Das Verhältnis von Höhe h zu Breite b beträgt 1:1.
Das Ende des Schneidkopfes -2- ist als stirnseitige Schneidkante -4- ausgeführt, die bis zur Bohrerachse -3- des Schneidwerkzeuges durchgehend gerade verläuft und mit der Bohrerachse -3- einen Winkel α von 89,5° einschließt. Über die Bohrerachse -3- hinaus geht die stirnseitige Schneidkante -4- in einen abgewinkelten Schneidkantenabschnitt -9- über, der mit einer Senkrechten -6- zur Bohrerachse -3- einen Winkel κ von 20° einschließt. Der vorspringende Abschnitt -8- des Schneidkopfes -2- weist seitlich eine gerade Schneidkante -5- auf, die beim Bohren die Bohrungswandung schneidet. Die seitliche Schneidkante -5- schließt mit der Senkrechten -6- zur Bohrerachse -3- einen Winkel β von 91 ein. Die seitliche Schneidekante -5- geht in eine gerade, rückseitige Schneidkante -7- über, die etwa parallel zur stirnseitigen Schneidkate -4- verläuft und mit der Bohrerachse -3- einen Winkel γ von 89° einschließt.

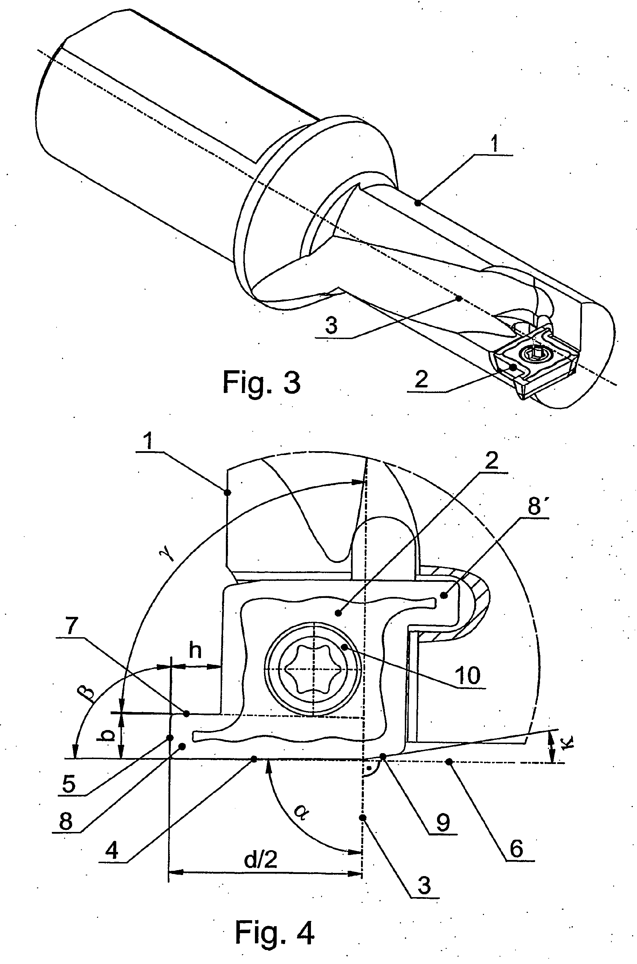

Die Figuren 3 und 4 zeigen eine Variante eines erfindungsgemäßen Schneidwerkzeuges bei der der Schneidkopf -2- als Wendeschneidplatte mit etwa quadratischer Grundform und zwei spiegelverkehrt gegenüberliegenden, vorspringenden Abschnitte -8-, -8'- ausgeführt ist. Die einzelnen Schneidkanten -4-, -5- und -7- sind vergleichbar mit den entsprechenden Schneidkanten -4-, -5- und -7- der Ausführungsform nach den Figuren 1 und 2 ausgeführt. Durch Lösen der Befestigungsschraube -10- und Verdrehen der Wendeschneidplatte um 180° wird der zweite vorspringende Abschnitt -8'- zum Einsatz gebracht. In der dargestellten Ausführung weist der zweite Abschnitt -8'- dieselben Schneidkanten -4-, -5- und -7- auf, wie der Abschnitt -8-. Ebenso ist es jedoch denkbar, dass der zweite Abschnitt -8'- anders ausgestaltete Schneidkanten aufweist.

## Patentansprüche

1. Schneidwerkzeug zum Drehen und Bohren ins Volle, bestehend aus einem Bohrerschaft (1) und einem Schneidkopf (2) an einem Ende mit einer im wesentlichen etwa quer zur Bohrerachse (3) verlaufenden geraden, stirnseitigen Schneidkante (4) die bis zur Bohrerachse (3) schneidet und mit dieser einen Winkel α von weniger als 90° einschließt und einer daran anschließenden, die Bohrungswandung schneidenden, geraden, seitlichen Schneidkante (5), die mit einer Senkrechten (6) zur Bohrerachse (3) einen Winkel β von mehr als 90° einschließt und die wiederum in eine gerade, rückseitige Schneidkante (7) übergeht, die etwa parallel zur stirnseitigen Schneidkante (4) verläuft,
**dadurch gekennzeichnet,**
**dass** die seitliche Schneidkante (5) an einem Abschnitt (8) des Schneidkopfes (2) ausgeführt ist, der vom Bohrerschaft (1) mit einer Höhe h im Bereich von mindestens 5 % bis maximal 40 % des Bohrerdurchmessers d vorspringt und der eine Breite b im Bereich von mindestens 5 % bis maximal 40 % des Bohrerdurchmessers d aufweist, wobei das Verhältnis von Höhe h zu Breite b im Bereich von 1 : 0,7 bis 1 : 1,3 liegt und dass die rückseitige Schneidkante (7) mit der Bohrerachse (3) einen Winkel γ von weniger als 90° einschließt.

2. Schneidwerkzeug zum Drehen und Bohren ins Volle nach Anspruch 1, **dadurch gekennzeichnet, dass** der Abschnitt (8) vom Bohrerschaft (1) mit einer Höhe h im Bereich von 5 % bis 30 % und mit einer Breite b von 10 % bis 30 % des Bohrerdurchmessers d vorspringt.

3. Schneidwerkzeug zum Drehen und Bohren ins Volle nach Anspruch 1 oder 2, **dadurch gekennzeichnet, dass** die stirnseitige Schneidkante (4) zumindest bis zur Bohrerachse (3) durchgehend gerade verläuft.

4. Schneidwerkzeug zum Drehen und Bohren ins Volle nach einem der Ansprüche 1 bis 3, **dadurch gekennzeichnet, dass** die stirnseitige Schneidkante (4) mit der Bohrerachse (3) einen Winkel α von etwa 89,5° einschließt.

5. Schneidwerkzeug zum Drehen und Bohren ins Volle nach einem der Ansprüche 1 bis 4, **dadurch gekennzeichnet**, das die seitliche Schneidkante (5) mit einer Senkrechten (6) zur Bohrerachse (3) einen Winkel β einschließt, der im Bereich von etwa 91° liegt.

6. Schneidwerkzeug zum Drehen und Bohren ins Volle nach einem der Ansprüche 1 bis 5, **dadurch gekennzeichnet, dass** die rückseitige Schneidkante (7) mit der Bohrerachse (3) einen Winkel γ von etwa 89° einschließt.

7. Schneidwerkzeug zum Drehen und Bohren ins Volle nach einem der Ansprüche 1 bis 6, **dadurch gekennzeichnet, dass** die stirnseitige Schneidkante (4) über die Bohrerachse (3) hinaus einen Schneidkantenabschnitt (9) aufweist der mit einer Senkrechten (6) zur Bohrerachse (3) einen Winkel κ von 5° bis 20° einschließt.

8. Schneidwerkzeug zum Drehen und Bohren ins Volle nach einem der Ansprüche 1 bis 7, **dadurch gekennzeichnet, dass** der Schneidkopf (2) ein auswechselbarer Schneideinsatz ist.

9. Schneidwerkzeug zum Drehen und Bohren ins Volle nach Anspruch 8, **dadurch gekennzeichnet, dass** der auswechselbare Schneideinsatz (2) als Wendeschneidplatte mit im wesentlichen quadratischer oder rechteckiger Grundform mit zwei spiegelverkehrt gegenüberliegenden, vorspringenden Abschnitten (8,8') ausgeführt ist.

## Claims

1. Cutting tool for turning and drilling from solid, consisting of a drill shaft (1) and at one end a cutting head (2) with a straight front cutting edge (4) which is disposed substantially approximately transversely to the drill axis (3), which cuts up to the drill axis (3) and which includes with the latter an angle α of less than 90°, and of an adjoining straight lateral cutting edge (5) which cuts the bore wall, which includes with a perpendicular (6) to the drill axis (3) an angle β of more than 90° and which in turn merges into a straight rear cutting edge (7) which is disposed approximately parallel to the front cutting edge (4),
**characterised in that**
the lateral cutting edge (5) is implemented on a portion (8) of the cutting head (2) which projects from the drill shaft (1) with a height h in the range from at least 5% to not more than 40% of the drill diameter d and which has a width b in the range from at least 5% to not more than 40% of the drill diameter d, the ratio of height h to width b being in the range from 1:0.7 to 1:1.3, and **in that** the rear cutting edge (7) includes with the drill axis (3) an angle γ of less than 90°.

2. Cutting tool for turning and drilling from solid according to Claim 1, **characterised in that** the portion (8) projects from the drill shaft (1) with a height h in the range from 5% to 30% and with a width b from 10% to 30% of the drill diameter d.

3. Cutting tool for turning and drilling from solid according to Claim 1 or 2, **characterised in that** the front cutting edge (4) runs continuously straight at least up to the drill axis (3).

4. Cutting tool for turning and drilling from solid according to any one of Claims 1 to 3, **characterised in that** the front cutting edge (4) includes with the drill axis (3) an angle α of approximately 89.5°.

5. Cutting tool for turning and drilling from solid according to any one of Claims 1 to 4, **characterised in that** the lateral cutting edge (5) includes with a perpendicular (6) to the drill axis (3) an angle β which is in the region of approximately 91 °.

6. Cutting tool for turning and drilling from solid according to any one of Claims 1 to 5, **characterised in that** the rear cutting edge (7) includes with the drill axis (3) an angle γ of approximately 89°.

7. Cutting tool for turning and drilling from solid according to any one of Claims 1 to 6, **characterised in that** the front cutting edge (4) has beyond the drill axis (3) a cutting edge section (9) which includes with a perpendicular (6) to the drill axis (3) an angle κ from 5° to 20°.

8. Cutting tool for turning and drilling from solid according to any one of Claims 1 to 7, **characterised in that** the cutting head (2) is an exchangeable cutting insert.

9. Cutting tool for turning and drilling from solid according to Claim 8, **characterised in that** the exchangeable cutting insert (2) is in the form of an indexable insert having a substantially square or rectangular basic shape with two opposite, mirror-inverted projecting portions (8, 8').

## Revendications

1. Outil de coupe pour tourner et percer dans la masse, se composant d'une tige (1) de foret et d'une tête de coupe (2) située à une extrémité qui comporte une arête de coupe frontale rectiligne (4) de tracé sensiblement perpendiculaire à l'axe (3) du foret, qui coupe jusqu'à l'axe (3) du foret et inclut avec celui-ci un angle α inférieur à 90°, et comporte aussi une arête de coupe latérale rectiligne (5) qui s'y raccorde, coupe la paroi du perçage, inclut un angle β supérieur à 90° avec une perpendiculaire (6) à l'axe (3) du foret et se raccorde elle-même dans une arête de coupe rectiligne arrière (7) de tracé sensiblement parallèle à l'arête de coupe frontale (4),
**caractérisé en ce que** l'arête de coupe latérale (5) est formée sur un segment (8) de la tête de coupe (2) qui fait saillie de la tige (1) de foret sur une hauteur h comprise dans la plage de 5% au moins à 40% au plus du diamètre d du foret, et une largeur b comprise dans la plage de 5% au moins à 40% au plus du diamètre d du foret, le rapport entre la hauteur h et la largeur b étant dans la plage de 1:0,7 à 1:1,3, et **en ce que** l'arête de coupe arrière (7) inclut un angle γ inférieur à 90% avec l'axe (3) du foret.

2. Outil de coupe pour tourner et percer dans la masse selon la revendication 1, **caractérisé en ce que** le segment (8) fait saillie de la tige (1) de foret sur une hauteur h comprise dans la plage de 5% à 30% du diamètre d du foret et une largeur b comprise dans la plage de 10% à 30% de ce diamètre.

3. Outil de coupe pour tourner et percer dans la masse selon la revendication 1 ou 2, **caractérisé en ce que** le tracé de l'arête de coupe frontale (4) est rectiligne continu au moins jusqu'à l'axe (3) du foret.

4. Outil de coupe pour tourner et percer dans la masse selon l'une quelconque des revendications 1 à 3, **caractérisé en ce que** l'arête de coupe frontale (4) inclut un angle α d'environ 89,5° avec l'axe (3) du foret.

5. Outil de coupe pour tourner et percer dans la masse selon l'une quelconque des revendications précédentes, **caractérisé en ce que** l'arête de coupe latérale (5) inclut un angle β compris dans la plage d'environ 91° avec une perpendiculaire (6) à l'axe (3) du foret.

6. Outil de coupe pour tourner et percer dans la masse selon l'une quelconque des revendications précédentes, **caractérisé en ce que** l'arête de coupe arrière (7) inclut un angle γ d'environ 89° avec l'axe (3) du foret.

7. Outil de coupe pour tourner et percer dans la masse selon l'une quelconque des revendications précédentes, **caractérisé en ce que** l'arête de coupe frontale (4) comprend, au delà de l'axe (3) du foret, un segment (9) d'arête de coupe qui inclut un angle κ de 5 à 20° avec une perpendiculaire (6) à l'axe (3) du foret.

8. Outil de coupe pour tourner et percer dans la masse selon l'une quelconque des revendications précédentes, **caractérisé en ce que** la tête de coupe (2) est un insert de coupe interchangeable.

9. Outil de coupe pour tourner et percer dans la masse selon la revendication 8, **caractérisé en ce que** l'insert de coupe interchangeable (2) est exécuté sous forme de plaquette de coupe réversible à forme de base sensiblement carrée ou rectangulaire, à deux segments saillants (8, 8') opposés en miroir.
